# EUROPEAN PATENT APPLICATION

(11) **EP 3 588 963 A1**
(43) Date of publication of application: **01.01.2020**
(21) Application number: 19181446.6
(22) Date of filing: 20.06.2019
(51) Int. Cl.: H04N 21/218, H04N 21/262, H04N 21/2668, H04N 21/6587, H04N 21/81

(54) **TRANSMITTING APPARATUS, TRANSMITTING METHOD, RECEIVING APPARATUS, RECEIVING METHOD, AND PROGRAMS**

(30) Priority: 25.06.2018 JP 2018120188
(71) Applicant: CANON KABUSHIKI KAISHA, Ohta-ku Tokyo 146-8501 (JP)
(72) Inventor: SUGIMOTO, Shun, Ohta-ku, Tokyo 146-8501 (JP)
(74) Representative: Uffindell, Christine Helen

(57) **Abstract**

A transmitting apparatus (101) receives a request for a video segment from a receiving apparatus (102) (S609), determines which one of a first video segment and a second video segment based on video data is to be transmitted, and transmits the determined video segment (S610). The second video segment is a video segment that corresponds to either or both of a shorter time period than the first video segment and a wider space area than the first video segment.

## Description

### BACKGROUND OF THE INVENTION

### Field of the Invention

The present invention relates to a method for communicating data related to a virtual viewpoint image.

### Description of the Related Art

MPEG-DASH and HTTP Live Streaming (HLS) are known as communication protocols for performing streaming distribution of media content such as video and audio. In these communication protocols, a server (a transmitting apparatus) prepares media segments and descriptive data. Media segments are, for example, video segments into which video data is divided in units of a certain time period and audio segments into which audio data is divided in substantially the same manner. Descriptive data is data including, for each media segment, a Uniform Resource Locator (URL) for requesting the media segment. A receiving apparatus (a client) acquires descriptive data from the transmitting apparatus, and selectively acquires a media segment on the basis of a URL described in the descriptive data. In addition, as described in Japanese Patent Laid-Open No. 2015-187797, an image is known on which an operation performed on a virtual viewpoint by the user is reflected (hereinafter referred to as a virtual viewpoint image).

In a case where a server provides a client with data of the entire virtual space, the client can freely operate a virtual viewpoint; however, the amount of transmission data is increased in this case. In contrast, in a case where the server provides only data corresponding to the virtual viewpoint specified by the client, the amount of transmission data can be reduced but communication becomes less interactive. That is, it may be difficult to perform timely switching of a displayed image in accordance with an operation performed on the virtual viewpoint on the client side.

### SUMMARY OF THE INVENTION

The present invention has been made in light of the above-described problems, and can suppress an increase in the amount of transmission data and improve tracking with respect to an operation performed on a virtual viewpoint.

The present invention in its first aspect provides a transmitting apparatus as specified in claims 1 to 11.

The present invention in its second aspect provides a receiving apparatus as specified in claims 12 to 13.

The present invention in its third aspect provides a transmitting method as specified in claim 14.

The present invention in its fourth aspect provides a receiving method as specified in claim 15.

The present invention in its fifth aspect provides a program as specified in claim 16.

The present invention in its sixth aspect provides a program as specified in claim 17.

Further features of the present invention will become apparent from the following description of embodiments with reference to the attached drawings.

### BRIEF DESCRIPTION OF THE DRAWINGS

Fig. 1 illustrates an example of the configuration of a system.
Fig. 2 is a block diagram illustrating an example of a hardware configuration of a transmitting apparatus.
Fig. 3 is a block diagram illustrating an example of a functional configuration of the transmitting apparatus.
Fig. 4 is a block diagram illustrating an example of a hardware configuration of a receiving apparatus.
Fig. 5 is a block diagram illustrating an example of a functional configuration of the receiving apparatus.
Fig. 6 is a flow chart for describing an operation of a transmitting apparatus according to a first embodiment.
Fig. 7 is a diagram for describing differences between a normal-time segment and a change-of-viewpoint-time segment.
Fig. 8 is a flow chart for describing an operation of a receiving apparatus according to the first embodiment.
Fig. 9 is a flow chart for describing details of S900 in Fig. 8.
Figs. 10A and 10B illustrate an example of a way of expressing viewpoint information in three-dimensional space.
Fig. 11 is a diagram for describing a procedure for acquiring viewpoint information.
Fig. 12 is a flow chart for describing an operation of a transmitting apparatus according to a second embodiment.
Fig. 13 is a flow chart for describing an operation of a receiving apparatus according to the second embodiment.

### DESCRIPTION OF THE EMBODIMENTS

In the following, with reference to the attached drawings, the present invention will be described in detail on the basis of its embodiments. Note that configurations described in the following embodiments are just examples, and the present invention is not limited to the illustrated configurations. Each of the embodiments of the present invention described below can be implemented solely or as a combination of a plurality of the embodiments or features thereof where necessary or where the combination of elements or features from individual embodiments in a single embodiment is beneficial.

### First Embodiment

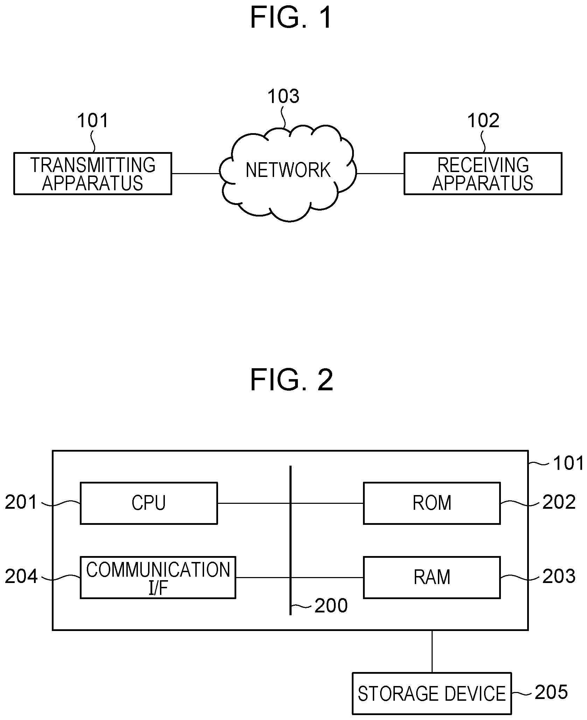

Fig. 1 is a diagram illustrating an example of a communication system according to a present embodiment. A transmitting apparatus 101 functions as a server apparatus that provides video segments based on video data. The transmitting apparatus 101 can be realized by, for example, a digital camera, a digital video camera, a network camera, a projector, a smartphone, or a personal computer (PC). Note that, in the present embodiment, an example in which the transmitting apparatus 101 transmits a video segment will be mainly described; however, the transmitting apparatus 101 can transmit, for example, various types of media segments including audio segments and initialization segments to a receiving apparatus 102.

The receiving apparatus 102 functions as a client apparatus that receives video segments and plays back a video. The receiving apparatus 102 can be realized by, for example, a digital television with a display function and a communication function, a tablet, a smartphone, a PC, or a head-mounted display (HMD).

A network 103 is a communication path for connecting the transmitting apparatus 101 and the receiving apparatus 102 to each other. The network 103 may be, for example, a local-area network (LAN), a wide area network (WAN), or a network based on Long Term Evolution (LTE), which is a public mobile communication network, or may also be a combination of these networks.

Fig. 2 is a diagram illustrating an example of a hardware configuration of the transmitting apparatus 101. A system bus 200 connects, for example, a central processing unit (CPU) 201, a read-only memory (ROM) 202, a random access memory (RAM) 203, and a communication interface 204 to each other, and is a transfer path for various types of data.

The CPU 201 performs central control on various hardware components and controls the entire transmitting apparatus 101. The transmitting apparatus 101 may have a plurality of CPUs 201. The ROM 202 stores, for example, control programs executed by the CPU 201. The RAM 203 functions as, for example, a main memory or a work area of the CPU 201, and temporarily stores, for example, programs, data, and received packet data. The communication interface 204 is an interface for transmitting and receiving communication packets via the network 103, and is, for example, a wireless LAN interface, a wired LAN interface, or a public mobile communication interface.

A storage device 205 is, for example, a hard disk drive (HDD) or a solid state drive (SSD). In the present embodiment, an example will be described in which the storage device 205 is located outside the transmitting apparatus 101; however, the storage device 205 may be built in the transmitting apparatus 101. In the present embodiment, the storage device 205 stores material data to be used to generate a virtual viewpoint image. The material data is, for example, multi-viewpoint image data. Multi-viewpoint image data is image data acquired by capturing images of a subject to be imaged (for example, a soccer field) from a plurality of different directions simultaneously. Note that the material data is not limited to multi-viewpoint image data and may be, for example, a combination of three-dimensional shape data and texture data of objects (for example, players and a ball in a case where a soccer game is a subject to be imaged). The three-dimensional shape data and the texture data can be generated from multi-viewpoint image data by an existing method (for example, the Visual Hull). In this manner, as long as the material data stored in the storage device 205 can be used to generate a virtual viewpoint image, the format of the material data is not specifically limited. In addition, the material data stored in the storage device 205 may be acquired in real time from an image capturing apparatus or may also be data generated in advance. In the following, an example of a case where the material data is multi-viewpoint image data will be mainly described.

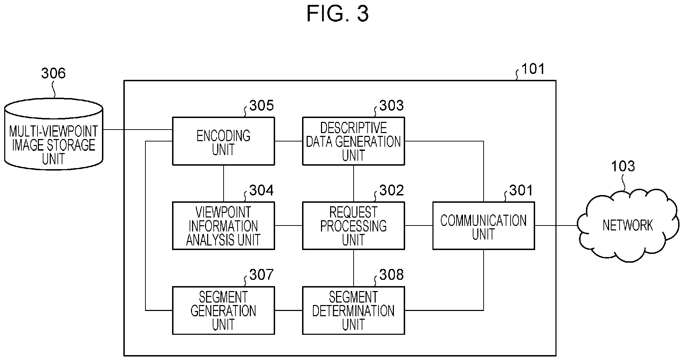

Fig. 3 is a diagram illustrating an example of a functional configuration of the transmitting apparatus 101. Note that, in the present embodiment, the functions of the following various functional blocks will be realized by the CPU 201 executing software programs stored in the ROM 202 and the RAM 203. Note that some or all of the functional blocks may be implemented via hardware.

A communication unit 301 performs protocol processing on communication packets transmitted and received through the communication interface 204. The communication unit 301 transfers, to a request processing unit 302, various request packets received from the receiving apparatus 102, and transmits descriptive data generated by a descriptive data generation unit 303 and a video segment determined by a segment determination unit 308 to the receiving apparatus 102. In the present embodiment, an example will be described in which the Transmission Control Protocol (TCP)/Internet Protocol (IP) and the Hypertext Transfer Protocol (HTTP) are used. However, a communication protocol different from these communication protocols may also be used.

The request processing unit 302 processes a request packet received from the receiving apparatus 102. There are two types of request packets in the present embodiment, which are a descriptive data request packet for requesting descriptive data and a segment request packet for requesting a video segment. Descriptive data describes information regarding a location from which a video segment is requested (for example, an URL or an URI). URI is an abbreviation of Uniform Resource Identifier. A video segment is data obtained by temporally and spatially dividing video data. That is, the transmitting apparatus 101 according to the present embodiment provides, as a video segment, a predetermined time period of video data of a space corresponding to the position and direction of a virtual viewpoint (virtual camera) in video data corresponding to three-dimensional space.

Upon receiving a descriptive data request packet, the request processing unit 302 commands the descriptive data generation unit 303 to generate descriptive data. In a case where the descriptive data request packet includes viewpoint information, the request processing unit 302 commands a viewpoint information analysis unit 304 to analyze the viewpoint information. In contrast, upon receiving a segment request packet, the request processing unit 302 commands the segment determination unit 308 to determine a video segment to be transmitted. In a case where the segment request packet includes viewpoint information, the request processing unit 302 commands the viewpoint information analysis unit 304 to analyze the viewpoint information. Note that, in the present embodiment, an example will be mainly described in which viewpoint information is included in a descriptive data request packet; however, the viewpoint information and the descriptive data request may be included in a plurality of packets in a separated manner or the viewpoint information may be included in a segment request packet.

The descriptive data generation unit 303 generates descriptive data upon reception of a descriptive data request packet. Note that the timing at which descriptive data is generated is not limited to this timing. Descriptive data may be generated at predetermined time intervals, or new descriptive data may be generated at a timing at which a new video segment is generated. Descriptive data describes, for example, information regarding video or audio characteristics (for example, codec information, an image size, and a bit rate), information regarding a video segment (for example, a period of the video segment), and an URL for requesting a video segment. Descriptive data in the present embodiment corresponds to the MPEG-DASH Media Presentation Description (MPD) and HLS Playlists. In the present embodiment, an example based on MPEG-DASH will be mainly described; however, other communication protocols may also be used.

The viewpoint information analysis unit 304 analyzes the viewpoint information (parameter information regarding the virtual camera) included in the descriptive data request packet. The viewpoint information is, for example, information expressing a viewpoint position, a line-of-sight direction, a focal length, and an angle of view in three-dimensional space. Note that all of the above-described pieces of information do not have to be included in the viewpoint information. The viewpoint information analysis unit 304 inputs a result of analysis of the viewpoint information to an encoding unit 305.

The encoding unit 305 encodes multi-viewpoint image data (material data) acquired from a multi-viewpoint image storage unit 306 on the basis of the result of analysis of the viewpoint information. An encoding method for the multi-viewpoint image data may be, for example, H.264-Multiview Video Coding (MVC) or 3D Extensions of High Efficiency Video Coding (3D-HEVC). In addition, an original encoding method that has not yet been internationally standardized may also be used. Note that an example of the material data is not limited to multi-viewpoint image data. Another example of the material data may be three-dimensional shape data and texture data of objects (for example, players and a ball in a case where a soccer game is to be imaged) and three-dimensional shape data and texture data of a background region. In addition, another example of the material data may be color three-dimensional data, which is data obtained by adding a texture to three-dimensionally shaped constituents of the objects. The receiving apparatus 102 can generate a virtual viewpoint image by using the material data from the transmitting apparatus 101.

Note that the transmitting apparatus 101 is capable of generating a virtual viewpoint image by using material data and of providing the virtual viewpoint image to the receiving apparatus 102. When the transmitting apparatus 101 generates a virtual viewpoint image, communication becomes less interactive; however, even in a case where the receiving apparatus 102 has a low computational resource, a virtual viewpoint image can be displayed.

The encoding unit 305 inputs information regarding video or audio characteristics (for example, codec information, an image size, and a bit rate) to the descriptive data generation unit 303. The multi-viewpoint image storage unit 306 stores, in the storage device 205, material data (multi-viewpoint image data). The multi-viewpoint image data stored in the storage device 205 may be in any format. For example, images captured by a plurality of image capturing apparatuses may be stored without being compressed.

A segment generation unit 307 generates video segments from the multi-viewpoint image data (material data) encoded by the encoding unit 305. Container files, for example, in the Fragmented MP4 or TS format may be generated from the encoded multi-viewpoint image data. The segment determination unit 308 determines a video segment to be transmitted to the receiving apparatus 102 in response to the segment request received from the receiving apparatus 102.

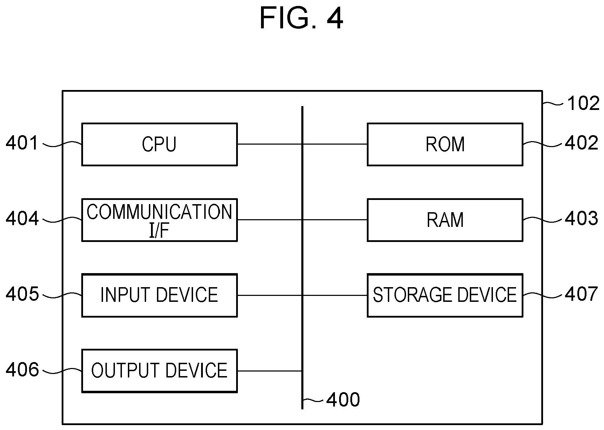

Fig. 4 is a diagram illustrating an example of a hardware configuration of the receiving apparatus 102. A system bus 400, a CPU 401, a ROM 402, a RAM 403, and a communication interface 404 function substantially the same as those illustrated in Fig. 2, and thus a description thereof will be omitted. An input device 405 is a device that accepts inputs from the user. Examples of the input device 405 include a touch panel, a keyboard, a mouse, and a button. For example, the position and direction of a virtual viewpoint can be changed by operating the input device 405.

An output device 406 is a device that outputs various types of information including a virtual viewpoint image, and is a device having a display function such as a display, a digital television, and a projector. A storage device 407 is a device for storing, for example, material data (multi-viewpoint image data) received from the transmitting apparatus 101 and a virtual viewpoint image. Examples of the storage device 407 include storage devices such as an HDD and an SSD.

In the present embodiment, the example is described in which the receiving apparatus 102 includes the input device 405, the output device 406, and the storage device 407; however, the input device 405, the output device 406, and the storage device 407 may also be installed outside the receiving apparatus 102.

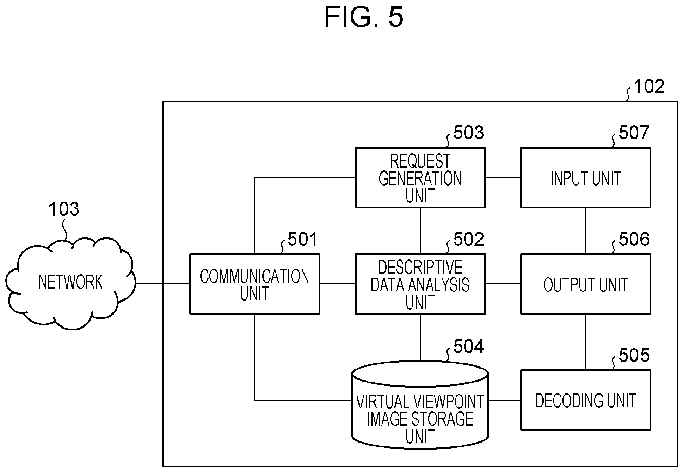

Fig. 5 is a diagram illustrating an example of a functional configuration of the receiving apparatus 102. Note that, in the present embodiment, the functions of the following various functional blocks will be realized by the CPU 401 executing software programs stored in the ROM 402 and the RAM 403. Note that some or all of the functional blocks may be implemented via hardware.

A communication unit 501 performs protocol processing on communication packets transmitted and received through the communication interface 404. The communication unit 501 transfers, to a descriptive data analysis unit 502, descriptive data received from the transmitting apparatus 101, and causes a virtual viewpoint image storage unit 504 to store a video segment in which material data (multi-viewpoint image data) is stored. In addition, the communication unit 501 transmits various request packets received from a request generation unit 503 to the transmitting apparatus 101 via the network 103. In the present embodiment, an example in which, similarly to the transmitting apparatus 101, the receiving apparatus 102 uses TCP/IP and HTTP will be described; however, the receiving apparatus 102 may use other protocols.

The descriptive data analysis unit 502 analyzes the descriptive data received from the transmitting apparatus 101. The descriptive data describes, for example, an URL and segment information for requesting a video segment, and the descriptive data analysis unit 502 inputs the content of the descriptive data to the request generation unit 503. Note that the content of the descriptive data may also be output at an output unit 506 such that the user can check it.

The request generation unit 503 generates various request packets to be transmitted to the transmitting apparatus 101. Request packets include a descriptive data request packet for requesting descriptive data and a segment request packet for requesting a video segment in which multi-viewpoint image data (material data) is stored. In addition, the request generation unit 503 stores, in a descriptive data request packet, viewpoint information input from an input unit 507. Viewpoint information does not have to be stored in a descriptive data request packet and may be stored in a segment request packet, or may also be stored in an independent packet different from descriptive data request packets and segment request packets.

The virtual viewpoint image storage unit 504 stores, in the storage device 407, the video segment received from the communication unit 501. Note that in a case where the material data (multi-viewpoint image data) included in a video segment is encoded, the video segment may first be decoded by a decoding unit 505 and then be stored in the storage device 407. Moreover, the virtual viewpoint image generated from the material data (multi-viewpoint image data) by the decoding unit 505 may also be stored in the storage device 407. Moreover, in a case where a virtual viewpoint image itself is received from the transmitting apparatus 101, the virtual viewpoint image may be stored in the storage device 407.

The decoding unit 505 decodes the material data (or the virtual viewpoint image) received from the transmitting apparatus 101. The output unit 506 outputs the decoded data acquired from the decoding unit 505 to the output device 406. The input unit 507 outputs, to the request generation unit 503, viewpoint information (parameters of the virtual camera) input via the input device 405 by the user. In addition, the input information may also be output to the output device 406 via the output unit 506.

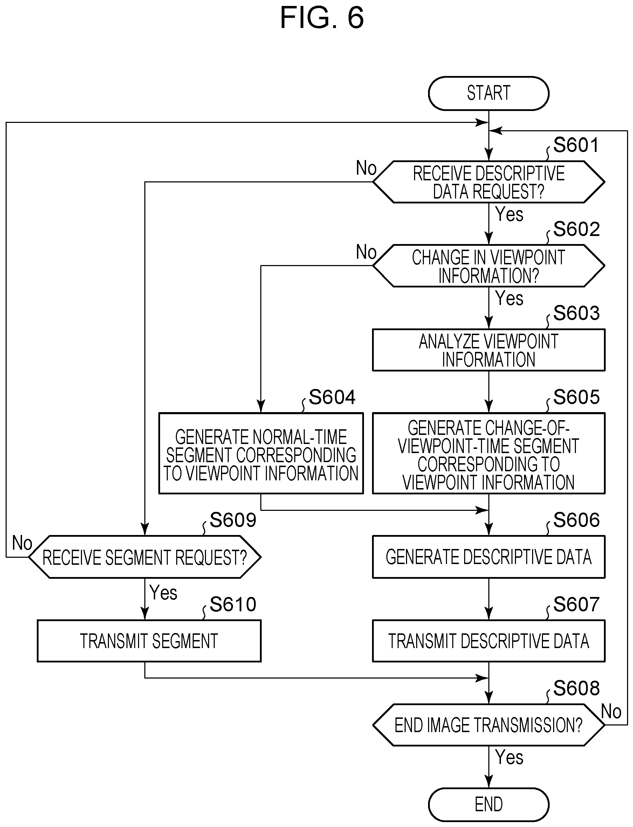

Fig. 6 is a flow chart illustrating the procedure of processing performed by the transmitting apparatus 101. The flow chart is realized by the CPU 201 reading out and executing a program stored in the ROM 202 in the transmitting apparatus 101.

In S601, the request processing unit 302 determines whether a descriptive data request packet has been received. In a case where a descriptive data request packet has been received, the process proceeds to S602. In a case where no descriptive data request packet is received, the process proceeds to S609.

In S602, the viewpoint information analysis unit 304 determines whether there is a change in viewpoint information (parameters of the virtual camera). As an example of the determination method, there is a method in which the travel distance of a virtual viewpoint in a predetermined period is compared with a threshold. For example, the total travel distance of a virtual viewpoint is calculated every two seconds, and in a case where the total travel distance is greater than or equal to a threshold, it can be determined that there is a change in viewpoint information. As another example of the determination method, a method is applicable in which the difference between the position of a virtual viewpoint at a first time and the position of the virtual viewpoint at a second time is compared with a threshold. That is, in a case where the difference between the positions of the virtual viewpoint at the first time and the second time is greater than or equal to the threshold, the transmitting apparatus 101 determines that there is a change in viewpoint information. In a case where the difference is less than the threshold, the transmitting apparatus 101 can determine that there is no change in viewpoint information.

Moreover, as another example of the determination method, a method is applicable in which the difference between the direction of a virtual viewpoint at a first time and the direction of the virtual viewpoint at a second time is compared with a threshold. That is, in a case where the difference between the directions of the virtual viewpoint at the first time and the second time is greater than or equal to the threshold, the transmitting apparatus 101 determines that there is a change in viewpoint information. In a case where the difference is less than the threshold, the transmitting apparatus 101 can determine that there is no change in viewpoint information.

Moreover, as another example of the determination method, there is a method in which the receiving apparatus 102 performs a determination. That is, in a case where the receiving apparatus 102 transmits viewpoint information only when there is a change in viewpoint, the transmitting apparatus 101 can always determine that there has been a change in viewpoint information in a case where the transmitting apparatus 101 receives the viewpoint information. In a case where there is a change in viewpoint information, the process proceeds to S603. In a case where there is no change in viewpoint information, the process proceeds to S604.

In S603, the viewpoint information analysis unit 304 performs analysis processing on the viewpoint information. In S604, the encoding unit 305 performs normal multi-viewpoint image data encoding, and the segment generation unit 307 generates a video segment (a normal-time video segment). In S605, the encoding unit 305 performs change-of-viewpoint-time multi-viewpoint image data encoding, and the segment generation unit 307 generates a video segment (a change-of-viewpoint-time video segment). That is, the viewpoint information analysis unit 304 determines which one of a normal-time segment and a change-of-viewpoint-time segment is to be provided to the receiving apparatus 102. The differences between a normal-time segment and a change-of-viewpoint-time segment will be described later.

In S606, the descriptive data generation unit 303 generates descriptive data in which information for requesting the video segment generated in S604 or S605 (an URI or an URL) is described. That is, the descriptive data generation unit 303 generates descriptive data in which information regarding the location of either one of the normal-time segment and the change-of-viewpoint-time segment is described. In S607, the communication unit 301 transmits the descriptive data generated in S606 to the receiving apparatus 102. In S608, it is determined whether to end image data transmission service. In a case where the service is continued, the process proceeds to S601.

In S609, the request processing unit 302 determines whether a segment request packet (a request for a video segment) has been received from the receiving apparatus 102. In a case where a segment request packet has been received, the process proceeds to S610. In a case where no segment request packet is received, the process proceeds to S601. In S610, the communication unit 301 transmits a video segment (a normal-time segment or a change-of-viewpoint-time segment) corresponding to the segment request packet to the receiving apparatus 102, from which the segment request packet has been transmitted.

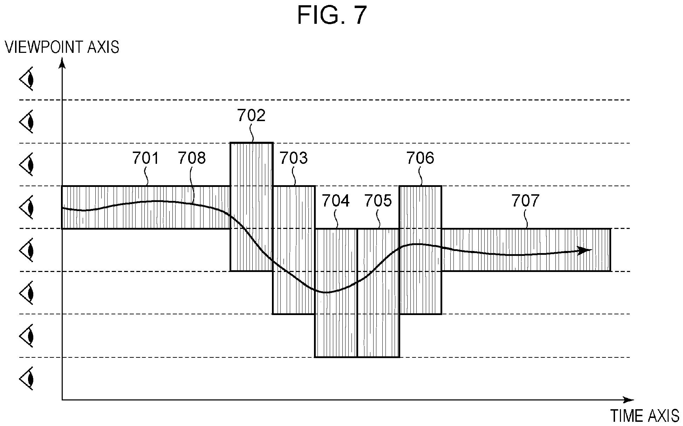

Fig. 7 is a diagram illustrating relationships between a normal-time segment and a change-of-viewpoint-time segment. In the present embodiment, a change-of-viewpoint-time segment (a second video segment) corresponds to either or both of a shorter time period than a normal-time segment (a first video segment) and a wider space area than a normal-time segment (a first video segment). Note that the viewpoint axis does not always have to be one dimension based on a single parameter and can be interpreted as the dimensions of a multi-dimensional region based on a plurality of parameters.

In Fig. 7, each of the rectangles denoted by reference numerals 701 to 707 is a video segment. A horizontally longer video segment corresponds to a longer time period. Moreover, a vertically longer video segment corresponds to a wider space area. Reference numeral 708 denotes the viewpoint position of the user. The receiving apparatus 102 transmits a descriptive data request packet to the transmitting apparatus 101 before an edge of each video segment is reached on the time axis.

The segments 701 and 707 are normal-time segments, each of which has a narrow viewpoint area in width and a long duration. That is, a video segment transmitted in a period during which the virtual viewpoint is not moving corresponds to either or both of a narrow space area and a long period. In general, a video segment corresponding to a narrow space area has a smaller amount of data than a video segment corresponding to a wide space area, and thus the amount of transmission data of a video segment per unit time can be reduced.

In contrast, the segments 702 to 706 are change-of-viewpoint-time segments, each of which has a wide viewpoint area in width and a short duration. That is, a video segment transmitted in a period during which the virtual viewpoint is moving corresponds to either or both of a wide space area and a short period. As a result, a change in virtual viewpoint can be closely tracked. Moreover, the duration of a video segment transmitted while the virtual viewpoint is moving is shortened, which makes it possible to interactively change a transmission target area in accordance with the movement of the virtual viewpoint, thereby providing an advantage in that the amount of transmission data is prevented from increasing. In addition, when the virtual viewpoint stops moving, switching to a normal-time segment can be promptly performed, thereby providing an advantage in that the amount of transmission data is reduced.

The segment determination unit 308 determines the presence or absence of a change in viewpoint information, and performs switching between a normal-time segment and a change-of-viewpoint-time segment on the basis of the result. Note that an example of a case having two patterns, which are a normal-time segment and a change-of-viewpoint-time segment, will be described in the present embodiment; however, video segments may be classified into three or more patterns in accordance with, for example, the travel distance of the virtual viewpoint and the moving speed of the virtual viewpoint. In addition, the width of the viewpoint area may be controlled in, for example, a possible range of various parameters included in viewpoint information described later, or may also be controlled as a combination of a plurality of fixed values of specific parameters. In addition, a normal-time segment may also be generated by connecting a plurality of change-of-viewpoint-time segments, each of which has a short duration. In other words, a period corresponding to a change-of-viewpoint-time segment may exist in a period corresponding to a normal-time segment.

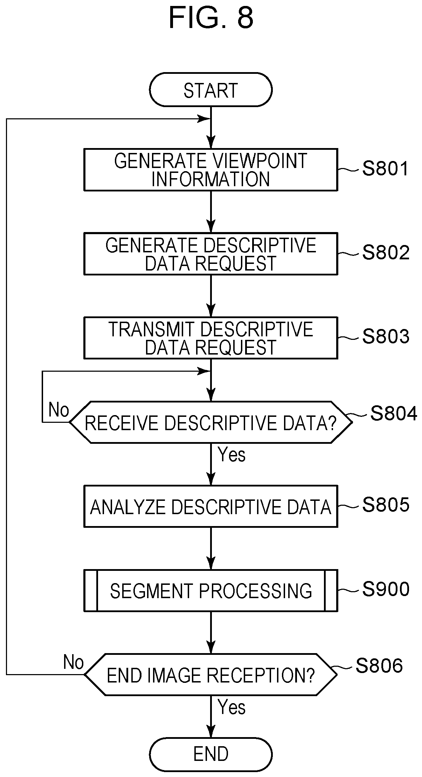

Fig. 8 is a flow chart for describing an operation of the receiving apparatus 102. The flow chart is realized by the CPU 401 of the receiving apparatus 102 reading out and executing a program stored in the ROM 402.

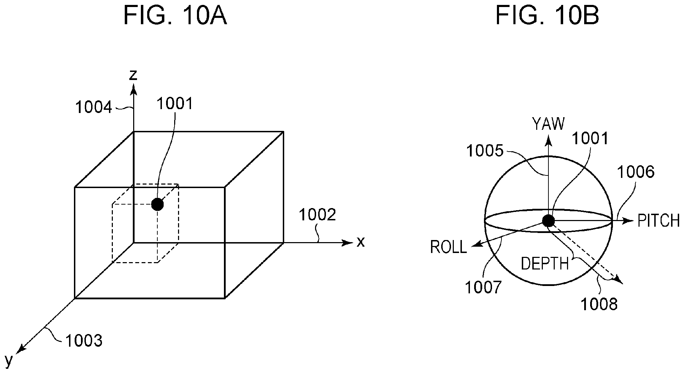

In S801, the request generation unit 503 generates current viewpoint information. An example of a method for expressing viewpoint information will be described later using Figs. 10A and 10B. In S802, the request generation unit 503 generates a descriptive data request packet. In the present embodiment, the descriptive data request packet includes the viewpoint information generated in S801.

In S803, the communication unit 501 transmits the descriptive data request packet to the transmitting apparatus 101. In S804, the communication unit 501 determines whether descriptive data has been received. In a case where descriptive data has been received, the process proceeds to S805.

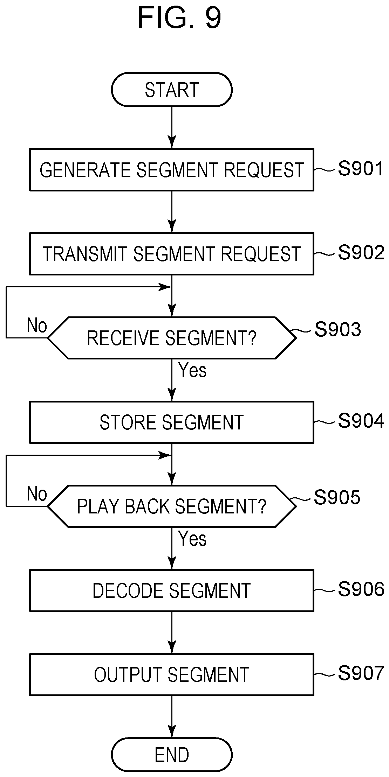

In S805, the descriptive data analysis unit 502 analyzes the descriptive data. In S900, the descriptive data analysis unit 502 performs segment processing on the basis of the descriptive data analyzed in S805. Details of the segment processing will be described later using Fig. 9. In S806, it is determined whether to end the service. In a case where the service is continued, the process proceeds to S801.

Fig. 9 is a flow chart illustrating the procedure of the segment processing performed in S900.

In S901, the request generation unit 503 generates a segment request packet. In S902, the communication unit 501 transmits the segment request packet to the transmitting apparatus 101. In S903, the communication unit 501 determines whether a video segment has been received from the transmitting apparatus 101. In a case where a video segment has been received, the process proceeds to S904. In S904, the virtual viewpoint image storage unit 504 stores, in the storage device 407, the video segment.

In S905, the decoding unit 505 determines whether the video segment needs to be played back. For example, in a case where all the data of a video segment is stored and playback of the temporally previous video segment is completed, it may be determined that the video segment needs to be played back, or another determination method may be used. In a case where the video segment needs to be played back, the process proceeds to S906. In S906, the decoding unit 505 performs decoding processing on the video segment. The video segment may be decoded in advance by performing S906 prior to S904 and the decoded video segment may be stored in the storage device 407. In S907, the output unit 506 outputs the video segment to the output device 406. As a result, a virtual viewpoint image is displayed.

Figs. 10A and 10B are diagrams illustrating an example of the method for expressing viewpoint information. Fig. 10A illustrates the position of a viewpoint in three-dimensional space. Reference numeral 1001 denotes a viewpoint position. Reference numerals 1002, 1003, and 1004 denote the x axis, the y axis, and the z axis in the three dimensional space, respectively. As an example of a way of expressing a viewpoint position on coordinate axes, a method in which a movable range is predefined for each coordinate axis and the viewpoint position is expressed using a numerical value from 0 to the range is taken as an example. In the present embodiment, the example is described in which the viewpoint position is expressed as absolute coordinates; however, the viewpoint position may be relative coordinates, an example of which is a proportion in a case where the maximum movable range is set to 1, or may also be a travel distance from the current viewpoint position.

Fig. 10B illustrates a line-of-sight direction from the viewpoint position. Reference numerals 1005, 1006, and 1007 denote a yaw axis indicating a line-of-sight direction, a pitch axis indicating inclination in the line-of-sight direction, and a roll axis indicating rotation in the line-of-sight direction, respectively. The orientation can be freely changed by changing parameters of these three axes. As an example of a way of expressing a line-of-sight direction, a method in which a movable range is predefined for each axis and the line-of-sight direction is expressed as, for example, 0 to 360 or - 180 to 180 is taken as an example. In the present embodiment, an example is described in which the line-of-sight direction is expressed as an absolute value; however, the line-of-sight direction may be expressed as a relative value or, for example, the difference from the current line-of-sight direction. In addition, reference numeral 1008 denotes a depth indicating the distance to a focus position. The unit of the depth may be an absolute value or a relative value. These parameters such as the viewpoint position, the line-of-sight direction, and the focus position do not always have to be included and a combination of one or more of the parameters may be used.

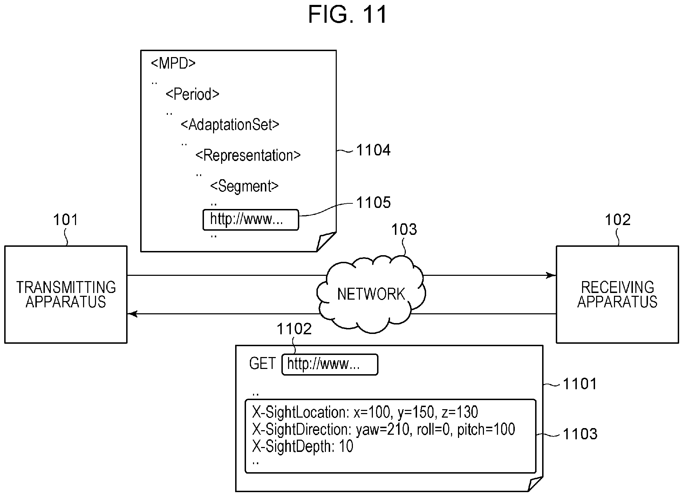

Fig. 11 is a diagram illustrating an example of a case where viewpoint information is acquired using an HTTP extension header. First, a descriptive data request 1101 is transmitted from the receiving apparatus 102 to the transmitting apparatus 101. The descriptive data request 1101 includes an access URL 1102 and viewpoint information 1103 for requesting descriptive data. The viewpoint information 1103 in Fig. 11 includes the current viewpoint position, the line-of-sight direction, and the focus position of the user (the receiving apparatus 102). As an extension header field, the viewpoint position is defined as X-SightLocation, the line-of-sight direction as X-SightDirection, and the focus position as X-SightDepth.

Upon receiving the descriptive data request 1101 from the receiving apparatus 102, the transmitting apparatus 101 transmits descriptive data 1104 to the receiving apparatus 102. Reference numeral 1104 denotes an example of descriptive data, which is an example assuming that streaming is performed in accordance with MPEG-DASH; however, other methods may also be used. For MPEG-DASH, xml descriptive data called MPD is used. In the descriptive data, various types of data are described in a nesting manner in accordance with their classifications. Moving image segment information and audio segment information are described in a Segment tag. Reference numeral 1105 denotes an access URL for requesting a segment described in the Segment tag. Upon receiving the descriptive data 1104, the receiving apparatus 102 selects a desired video segment and generates a segment request packet using an access URL 1105 for the video segment. In HTTP-based streaming such as MPEG-DASH and HLS, a request for a video segment is realized by an HTTP GET request message.

The transmitting apparatus 101 in the present embodiment receives viewpoint information together with a descriptive data request packet from the receiving apparatus 102, determines the presence or absence of a change in viewpoint from the viewpoint information, and provides, when there is a change in viewpoint, a video segment having either or both of a wider viewpoint area and a shorter duration than normal times. This makes it possible to perform video transmission in which an increase in the amount of transmission data is suppressed and a change in viewpoint made by the user is closely tracked.

Note that the viewpoint information may be included in a segment request packet. In addition, in the above-described embodiment, the transmitting apparatus 101 rewrites the content of the descriptive data as information regarding a change-of-viewpoint-time segment when it is determined, from the viewpoint information received from the receiving apparatus 102, that there is a change in the viewpoint information. However, what is performed is not limited to this, and the content of the video segment may be changed without changing the content of the descriptive data.

### Second Embodiment

In the first embodiment, the example is described in which the transmitting apparatus 101 receives viewpoint information from the receiving apparatus 102, determines the presence or absence of a change in viewpoint, and changes a video segment to be provided to the receiving apparatus 102. In a second embodiment, an example will be described in which the transmitting apparatus 101 describes, in descriptive data, both information for acquiring a normal-time segment and information for acquiring a change-of-viewpoint-time segment, and the receiving apparatus 102 determines the presence or absence of a change in viewpoint and performs switching for a video segment to be acquired. The hardware configuration and functional configuration of the second embodiment are substantially the same as those of the first embodiment, and thus a description thereof will be omitted.

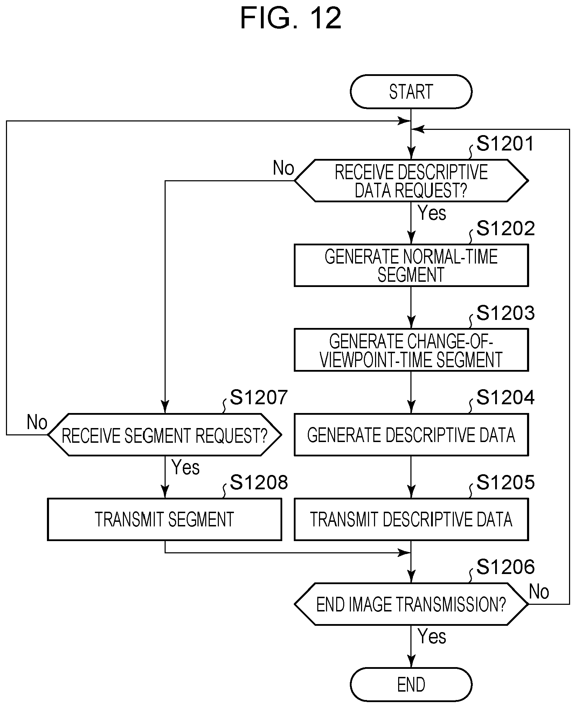

Fig. 12 is a flow chart for describing an operation of the transmitting apparatus 101 in the second embodiment. Processing performed in S1201, S1205, S1206, S1207, and S1208 is substantially the same as that performed in S601, S607, S608, S609, and S610 in Fig. 6, respectively, and thus a description thereof will be omitted.

In S1202, for each viewpoint, the encoding unit 305 encodes multi-viewpoint image data (material data) and the segment generation unit 307 generates a normal-time segment for when there is no change in viewpoint. In S1203, for each viewpoint, the encoding unit 305 encodes multi-viewpoint image data (material data) and the segment generation unit 307 generates a video segment for when there is a change in viewpoint. In S 1204, the descriptive data generation unit 303 generates descriptive data in which information for requesting the video segments generated in S1202 and S1203 is described. That is, in S 1204, the descriptive data generation unit 303 generates descriptive data in which information regarding the locations of first and second video segments (the normal-time multi-viewpoint image and the change-of-viewpoint-time multi-viewpoint image) is described.

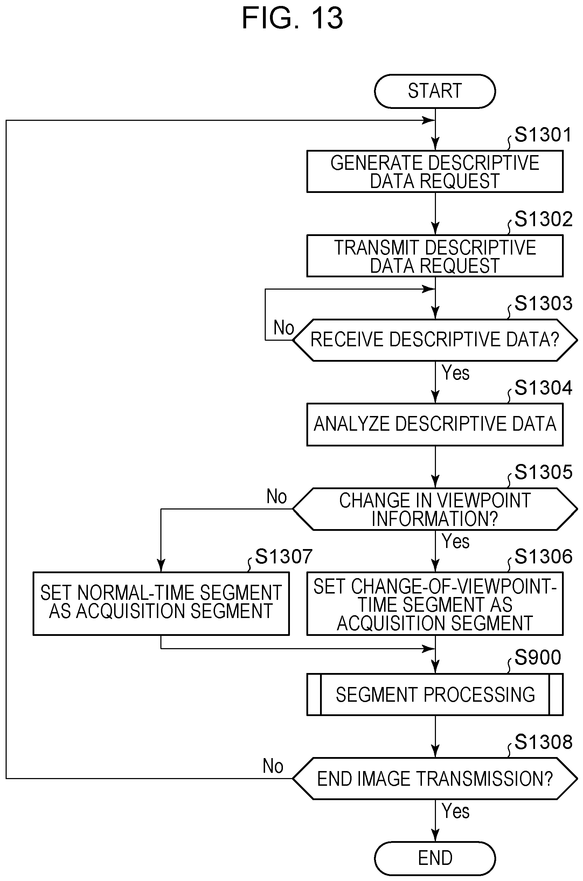

Fig. 13 is a flow chart for describing an operation of the receiving apparatus 102 in the second embodiment. Processing performed in S1301, S1302, S1303, and S1308 is substantially the same as that performed in S802, S803, S804, and S806 in Fig. 8, respectively, and thus a description thereof will be omitted. In addition, the segment processing S900 is substantially the same as that performed in Fig. 9, and thus a description thereof will be omitted.

In S1304, the descriptive data analysis unit 502 analyzes the descriptive data. The descriptive data includes an access URL for a normal-time segment and an access URL for a change-of-viewpoint-time segment.

In S1305, the descriptive data analysis unit 502 determines the presence or absence of a change in viewpoint information. The determination method is as described in the first embodiment. Note that the receiving apparatus 102 may acquire viewpoint information on the basis of a mouse operation or a tablet operation performed by the user, or may also acquire viewpoint information from, for example, sensor information acquired from, for example, a HMD. In a case where it is determined that there is a change in viewpoint information, the process proceeds to S 1306. In a case where it is determined that there is no change in viewpoint information, the process proceeds to S1307.

In S1306, the request generation unit 503 sets a change-of-viewpoint-time segment as a video segment to be acquired. In S 1307, the request generation unit 503 sets a normal-time segment as a video segment to be acquired. That is, in S1306 and S1307, the request generation unit 503 determines, on the basis of the viewpoint information, which video segment out of the normal-time segment and the change-of-viewpoint-time segment is to be acquired. In S900, the receiving apparatus 102 acquires and plays back the video segment in accordance with the setting set in S1306 or S1307.

In the present embodiment, the receiving apparatus 102 determines the presence or absence of a change in viewpoint information. In a case where it is determined that there is a change in viewpoint information, the receiving apparatus 102 acquires a change-of-viewpoint-time segment, and in a case where it is determined that there is no change in viewpoint information, the receiving apparatus 102 acquires a normal-time segment. As a result, a processing load can be suppressed on the transmitting apparatus 101 side, and advantages similar to those of the first embodiment can be obtained.

In the first and second embodiments described above, the MPEG-DASH based examples have been mainly described; however, examples are not limited to these. For example, the present invention is applicable even to a system that does not provide descriptive data. In this case, the transmitting apparatus 101 can determine, on the basis of viewpoint information from the receiving apparatus 102, whether a normal-time segment is to be provided or a change-of-viewpoint-time segment is to be provided. Other Embodiments

Embodiments of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments. It will of course be understood that this invention has been described above by way of example only, and that modifications of detail can be made within the scope of this invention.

## Claims

1. A transmitting apparatus (101) for transmitting a video segment based on video data, comprising:
receiving means (301) configured to receive a request for a video segment from a receiving apparatus (102);
determination means (304, 308) configured to determine which one of a first video segment and a second video segment based on the video data is to be transmitted to the receiving apparatus (102); and
transmitting means (301) configured to transmit the video segment determined by the determination means to the receiving apparatus (102),
wherein the second video segment is a video segment that corresponds to either or both of a shorter time period than the first video segment and a wider space area than the first video segment.

2. The transmitting apparatus (101) according to Claim 1, wherein a period of time corresponding to the second video segment is contained within a period of time corresponding to the first video segment.

3. The transmitting apparatus (101) according to Claim 1 or 2, further comprising:
provision means (303) configured to provide,
in response to a request for descriptive data from the receiving apparatus (102),
descriptive data in which information regarding a location is described, the video segment being requested from the location.

4. The transmitting apparatus (101) according to Claim 3, wherein information regarding locations of the first and second video segments is described in the descriptive data.

5. The transmitting apparatus (101) according to Claim 3, wherein information regarding a location of either one of the first and second video segments is described in the descriptive data.

6. The transmitting apparatus (101) according to any one of Claims 3 to 5, wherein the information regarding the location is a uniform resource identifier (URI) or a uniform resource locator (URL).

7. The transmitting apparatus (101) according to Claim 5, wherein
the receiving means (301) is configured to receive viewpoint information regarding a virtual viewpoint from the receiving apparatus (102), and
the determination means (304) is configured to determine, on the basis of the received viewpoint information, information regarding which location out of locations of the first and second video segments is to be described in the descriptive data.

8. The transmitting apparatus (101) according to any one of Claims 1 to 3, wherein
the receiving means (301) is configured to receive viewpoint information regarding a virtual viewpoint from the receiving apparatus (102), and
the determination means (304) is configured to determine, on the basis of the received viewpoint information, which one of the first and second video segments is to be transmitted to the receiving apparatus (102).

9. The transmitting apparatus (101) according to Claim 8, wherein the determination means (304) is configured:
to determine the first video segment to be a video segment to be provided in a case where a travel distance of the virtual viewpoint in a predetermined period is less than a threshold, and
to determine the second video segment to be a video segment to be provided in a case where the travel distance of the virtual viewpoint in the predetermined period is greater than or equal to the threshold.

10. The transmitting apparatus (101) according to Claim 8, wherein the determination means (304) is configured:
to determine the first video segment to be a video segment to be provided in a case where the difference between a position of the virtual viewpoint at a first time and a position of the virtual viewpoint at a second time is less than a threshold, and
to determine the second video segment to be a video segment to be provided in a case where the difference between the position of the virtual viewpoint at the first time and the position of the virtual viewpoint at the second time is greater than or equal to the threshold.

11. The transmitting apparatus (101) according to Claim 8, wherein the determination means (304) is configured:
to determine the first video segment to be a video segment to be provided in a case where the difference between a direction of the virtual viewpoint at a first time and a direction of the virtual viewpoint at a second time is less than a threshold, and
to determine the second video segment to be a video segment to be provided in a case where the difference between the direction of the virtual viewpoint at the first time and the direction of the virtual viewpoint at the second time is greater than or equal to the threshold.

12. A receiving apparatus (102) for receiving a video segment based on video data, comprising:
deciding means (502) configured to decide a presence or absence of a change in viewpoint information regarding a position and a direction of a virtual viewpoint;
determination means (503) configured to determine, on the basis of the acquired viewpoint information, which one of a first video segment and a second video segment based on the video data is to be acquired; and
request means (501) configured to request the determined video segment from a transmitting apparatus (101),
wherein the second video segment is a video segment that corresponds to either or both of a shorter time period than the first video segment and a wider space area than the first video segment.

13. The receiving apparatus (102) according to Claim 12, further comprising:
an acquisition means (501) configured to acquire, from the transmitting apparatus (101), descriptive data in which information regarding a location of each of the first and second video segments is described;
wherein the request means (501) is configured to transmit the request to the location of the video segment determined by the determination means (503) out of the first and second video segments.

14. A transmitting method for transmitting a video segment based on video data, comprising:
receiving (S609) a request for a video segment from a receiving apparatus (102);
determining (S610) which one of a first video segment and a second video segment based on the video data is to be transmitted to the receiving apparatus (102); and
transmitting (S610) the determined video segment to the receiving apparatus (102),
wherein the second video segment is a video segment that corresponds to either or both of a shorter time period than the first video segment and a wider space area than the first video segment.

15. A receiving method for receiving a video segment based on video data, comprising:
deciding (S1305) a presence or absence of a change in viewpoint information regarding a position and a direction of a virtual viewpoint;
determining (S 1306, S 1307), on the basis of the acquired viewpoint information, which one of a first video segment and a second video segment based on the video data is to be acquired; and
requesting (S900) the determined video segment from a transmitting apparatus (101),
wherein the second video segment is a video segment that corresponds to either or both of a shorter time period than the first video segment and a wider space area than the first video segment.

16. A computer program comprising instructions which, when the program is executed by a computer, cause the computer to carry out the method of claim 14 or claim 15.
